Europäisches Patentamt

European Patent Office

Office européen des brevets

(11) Veröffentlichungsnummer: **0 434 023 A2**

## (12) EUROPÄISCHE PATENTANMELDUNG

(21) Anmeldenummer: 90124748.6

(22) Anmeldetag: **19.12.90**

(51) Int. Cl.⁵: **B23B 31/20, B23Q 11/10**

(30) Priorität: **20.12.89 DE 3942072**

(43) Veröffentlichungstag der Anmeldung:
**26.06.91 Patentblatt 91/26**

(84) Benannte Vertragsstaaten:
**DE ES FR GB IT SE**

(71) Anmelder: **HELMUT DIEBOLD GmbH & CO.,
GOLDRING-WERKZEUGFABRIK
An der Sägmühle 4
W-7455 Jungingen(DE)**

(72) Erfinder: **Diebold, Hermann, Dipl.-Ing.
Eineckweg 10
W-7455 Jungingen(DE)**

(74) Vertreter: **Jackisch, Walter, Dipl.-Ing. et al
Patentanwalt W. Jackisch & Partner
Menzelstrasse 40
W-7000 Stuttgart 1(DE)**

(54) Spannzangenfutter mit innerer Kühlmittelzufuhr zum Gewindeschneiden.

(57) Die Erfindung betrifft ein Spannzangenfutter mit innerer Kühlmittelzufuhr zum Gewindeschneiden. Es sind Spannzangenfutter zum Spannen von spanabhebenden Werkzeugen in rotierenden Spindeln von Werkzeugmaschinen bekannt, bei welchen der die Schneiden kühlende Kühlmittelstrom durch einen im Inneren des Spannzangenfutters angeordneten flexiblen Strömungskanal, z.B. einen Schlauch, erfolgt, wobei Leckverluste des Kühlmittels auftreten. Um dies zu vermeiden, ist zum Wegausgleich zwischen dem kleineren Vorschub der Werkzeugspindel (4) und der kleineren Steigung des zu schneidenden Gewindes der die Spannzange (13) mit dem Werkzeug enthaltende Mitnehmer (8) axial unter Aufrechterhaltung des Kühlmittelstromes in einem Grundkörper (2) des Spannzangenfutters in zwei Lagerstellen (32, 37) gelagert. Das Spannzangenfutter ist auch dann anwendbar, wenn das Werkstück die Vorschubbewegung ausführt.

EP 0 434 023 A2

# SPANNZANGENFUTTER MIT INNERER KÜHLMITTELZUFUHR ZUM GEWINDESCHNEIDEN

Die Erfindung betrifft ein Spannzangenfutter mit im Innern verlaufenden Kühlmittelkanälen, die zu einem spanabhebenden Werkzeug führen, das in einer Spannzange eingespannt ist, nach dem Oberbegriff des Anspruchs 1.

Zum Spannen von rotierenden, zerspanenden Werkzeugen in rotierenden Spindeln von Werkzeugmaschinen wird in bekannter Weise in die axiale, konische Aufnahmebohrung der Werkzeugspindel einer Werkzeugmaschine ein Spannfutter mit konischem Einsteckschaft eingesetzt. Dieses Spannfutter ist mit einem Innenkonus versehen, in welchem die mit einem identischen Außenkonus versehene Spannzange eingesteckt wird. Die Spannzange wird mittels einer als Schraubenmutter ausgebildeten Spannmutter mit ihrem Außenkonus in den identischen Innenkonus des Spannfutters, das auch als Mitnehmer ausgebildet sein kann, eingedrückt. Die Spannzange ist mit einer, den zylindrischen Schaft eines zerspanenden Werkzeuges, z.B. eines Gewindebohrers, aufnehmenden Bohrung versehen und hat achsparallele, über den Umfang gleichmäßig verteilt, beispielsweise sechs Schlitze. Sie unterteilen die Spannzange beispielsweise in sechs Segmente, die so ausgebildet sind, daß sich die den Schaft des eingespannten Werkzeuges aufnehmende Bohrung durch das Einpressen der Spannzange in den Außenkonus des Spannfutters durch Festziehen der Spannmutter im Durchmesser so verringert, daß der in die Aufnahmebohrung der Spannzange eingesetzte Schaft eines spanabhebenden Werkzeugs, z.B. eines Gewindebohrers, form- und kraftschlüssig umschlossen und somit das erforderliche Drehmoment schlupffrei übertragen wird, wobei zur Sicherstellung der Drehmomentenübertragung noch zusätzliche Profilflächen vorhanden sein können.

Beim Bearbeiten von Werkstoffen mit schneidenden Werkzeugen entsteht an den Schneiden der Werkzeuge und an den Schnittstellen des Werkstückes in Verbindung mit den oft hohen Drehzahlen des Werkzeugs eine starke Erhitzung, die sich auf Werkzeug und Werkstück nachteilig, ja sogar zerstörend auswirken kann und vor allem die Standzeit der Werkzeugschneiden stark reduziert. Zur Vermeidung dieser Wärmebelastungen von Werkzeug und Werkstück und zur Verminderung der bei der Zerspanung auftretenden extremen Reibkräfte werden, soweit fertigungs- und materialbedingt zulässig, die Schneiden und Schnittstellen mit einem flüssigen Kühlmittel überflutet, wobei dem Kühlmittel durch Zusätze schmierende Eigenschaften verliehen werden können, um die Reibkräfte zu verringern. Bei den bekannten Bearbeitungsverfahren werden die Schneiden des Werkzeuges und damit auch die Schnittstellen am Werkstück durch einen von außen unter Druck zugeleiteten Kühlmittelstrahl beaufschlagt, dem insbesondere bei der Bearbeitung von Bohrungen noch die Aufgabe zufällt, die bei der Bearbeitung anfallenden krümeligen Späne abzuführen.

Die Zuleitung des Kühlmittels an die Werkzeugschneiden und damit an die Schnittstelle, insbesondere bei waagrechten oder schräg angeordneten oder von unten zu bearbeitenden Bohrungen, insbesondere bei kleinen Durchmessern, ergibt trotz reichlicher Zufuhr des Kühlmittels unter Druck eine unzureichende Überflutung und Kühlung der Werkzeugschneiden und mangelhafte Ausschwemmung der angefallenen Späne, was häufig zum Ausbrechen der Werkzeugschneiden oder zum Bruch des Werkzeugs, z.B. des Gewindebohrers, führt, insbesondere bei Grund- oder Sackbohrungen.

Es sind auch Spannzangenfutter bekannt, bei welchen die Kühlmittelzufuhr vom Innern des Spannzangenfutters aus erfolgt, wobei das Werkzeug mit einer oder mehreren axialen Kühlmittelzuführbohrungen, die innerhalb des Werkzeuges angeordnet sind, versehen ist. Das Kühlmittel wird hierbei vom Außenbereich des Spannfutters durch einen oder mehrere Kanäle in das Innere des rotierenden Spannfutters eingeleitet und von hier aus durch einen unter Federdruck und Zwischenlage einer Dichtung an die Stirnfläche des Schaftes des eingespannten Werkzeuges, z.B. eines Gewindebohrers anliegenden, mit einer Zuführbohrung versehenen Stößels, zur Werkzeugschneide weitergeleitet (DE-GM 87 16 934).

Da beim Schneiden von Gewinden mit Gewindebohrern bzw. Gewindeschneidringen, insbesondere von Feingewinden, der Vorschub der Werkzeugspindel der Werkzeugmaschine nicht genau der Steigung des zu schneidenden Gewindes angepaßt werden kann, ist es erforderlich, dem die Spannzange mit dem darin eingespannten Gewindebohrer bzw. Gewindeschneidring für Außengewinde aufnehmenden Mitnehmer die Möglichkeit einer axialen Ausgleichsbewegung in Relation zum Spannfutter einzuräumen. Um hierbei die Kühlmittelzufuhr zu den Werkzeugschneiden sowohl beim Vorlauf als auch beim Rücklauf des Werkzeuges aufrechtzuerhalten und Leckströme zu vermeiden, ist es bekannt, z.B. den sich relativ zum Spannfutter bewegenden Mitnehmer und das in der Werkzeugspindel aufgenommene Spannfutter mit einem Schlauch zu verbinden. Zur erforderlichen Längenänderung durch die axiale Relativbewegung des Mitnehmers im Verhältnis zum Spannfutter, ist dieser Schlauch korkenzieherartig gewendelt. Diese Ausführung ist sehr platzaufwendig, da die Wendelung nicht eng dimensioniert werden kann, um ein Abklemmen des Schlauches zu vermeiden. Zudem ist ein zusätzlicher Raumbedarf für den Anschluß der beiden Schlauchenden erforderlich. Hinzu kommt, daß die Wechselbeanspruchung des Schlauches in Verbindung mit dem oft aggressiven Kühlmittelstrom sehr häufig zu Beschädigungen des Schlauches führt, was Störungen und Betriebsunterbrechungen zur Folge hat.

Die Aufgabe der Erfindung besteht darin, eine Kühlmittelzufuhr innerhalb des Spannzangenfutters und des Mitnehmers mit der darin aufgenommenen Spannzange so auszubilden, daß die für das Schneiden von Gewinden erforderliche axiale relative Differenzbewegung zwischen dem Spannfutter und dem axial beweglichen Mitnehmer ohne Leckverluste und Störungen des Betriebsablaufs erfolgt.

Diese Aufgabe wird bei einer Spannzange gemäß Gattungsbegriff durch die Merkmale des kennzeichnenden Teils des Anspruchs 1 gelöst.

Der gegen den Druck einer Feder innerhalb des Spannfutters axial beweglich gelagerte, die Spannzange und das Werkzeug aufnehmende Mitnehmer ist demnach in Richtung zum Einsteckko-nusdes Spannfutters hin in einer Eintiefung mit einer Buchse oder dgl. versehen, welche auf einem fest mit dem Spannfutter verbundenen Führungsbolzen axial beweglich gelagert ist. Der Führungsbolzen und die Buchse oder dgl. sind mit Strömungskanälen für das zugeführte Kühlmittel versehen, das durch diese Kanäle in den Innenraum des Mitnehmers einströmt. Der Mitnehmer, der die Spannzange mit dem eingespannten Werkzeug aufnimmt, führt während des Gewindeschneidvorgangs aufgrund der Differenz zwischen dem Vorschub der Werkzeugspindel und der Steigung des zu schneidenden Gewindes eine Axialbewegung auf dem feststehenden Führungsbolzen aus. Er ist außerdem an seinem anderen Ende noch in einer zweiten Lagerstelle im Spannfutter verdrehfest, jedoch axial beweglich gelagert. Das bei der Spannzange mit dem eingespannten Werkzeug zuweisende Teil des Mitnehmers ist mit einem axial beweglichen Stößel versehen, der unter Federdruck mit seinem ausragenden Ende unter Zwischenlage einer Dichtung an der Stirnfläche des Spannschaftes des Werkzeugs, z.B. des Gewindebohrers, anliegt. Dieser Stößel ist mit einer axialen und einer oder mehreren radialen Bohrungen versehen, durch welche das Kühlmittel vom Innenraum des Mitnehmers aus ein- und abströmt. Da bei dieser Ausführungsform keine beweglichen, weichen, dem Verschleiß unterliegenden Dicht- und Übertragungselemente Verwendung finden, sind Verschleiß und damit Störanfälligkeit weitgehend ausgeschlossen.

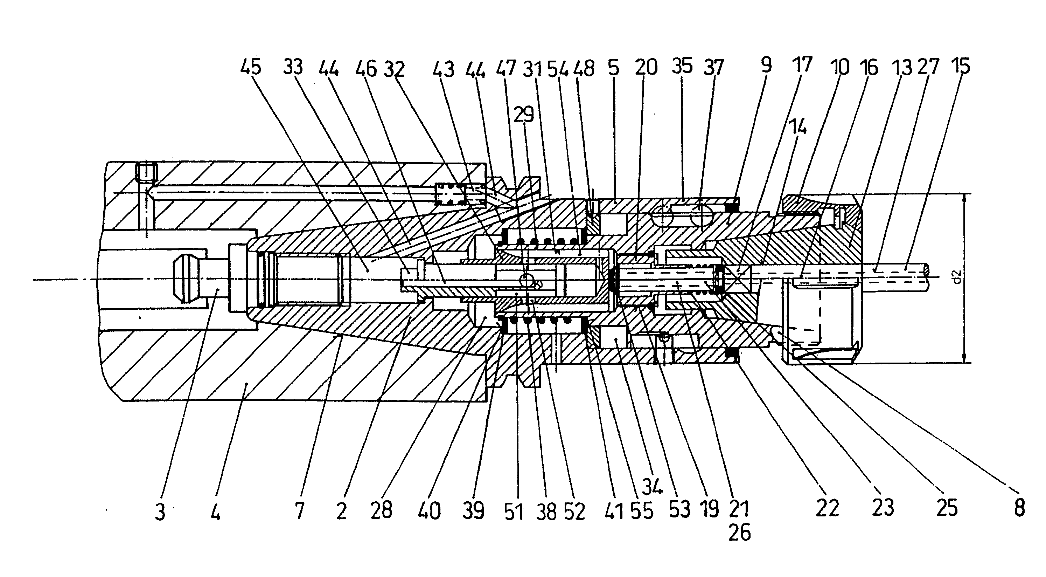

Die Zeichnung zeigt ein Ausführungsbeispiel des erfindungsgemäßen Spannzangenfutters im Längsschnitt.

Der in einem Innenkonus 7 der rotierenden Werkzeugspindel 4 aufgenommene Grundkörper 2 wird durch einen Anzugsbolzen 3 kraftschlüssig in der rotierenden Werkzeugspindel einer Werkzeugmaschine gehalten. Im frei abragenden Teil 5 des Grundkörpers 2 ist der Mitnehmer 8 drehfest, jedoch axial leicht beweglich gelagert. In seinem aus dem Grundkörper 2 ausragenden Ende 9 nimmt der Mitnehmer 8 die mit einer Spannmutter 10 versehene Spannzange 13 auf, in welcher in einer Aufnahmebohrung 14 das zu spannende Werkzeug 15, z.B. ein Gewindebohrer, an seinem Spannschaft 16 aufgenommen und durch Festziehen der Spannmutter 10 gehalten wird. Profilflächen 17, die in eine formschlüssige Aufnahme einragen, verhindern eine Verdrehung des eingespannten Werkzeugs 15, z.B. eines Gewindebohrers. In einer Aufnahmebohrung 19 des ausragenden Teiles 9 des Mitnehmers 8 ist eine Führungsmutter 20 eingeschraubt, in welcher der Zuführstößel 21 gegen den Druck der Feder 22 axial beweglich gelagert ist. Das aus der Führungsmutter 20 zum Spannschaft 16 weisende Ende 23 des Zuführstößels 21 liegt mit seiner Stirnfläche 25 unter Zwischenlage einer Dichtung 26 an der Stirnfläche des Spannschaftes 16 des eingespannten Werkzeuges 15 an. Eine Endscheibe 53 begrenzt den axialen Bewegungsbereich des Zuführstößels 21 in der Führungsmutter 20 bei nicht in den Mitnehmer 8 eingesetzter Spannzange 13. Der Zuführstößel 21 ist mit einer durchgehenden axialen Bohrung 26 zum Durchströmen von Kühlmittel versehen. Der Spannschaft 16 des Werkzeugs 15 ist mit mindestens einer axialen Bohrung 26 versehen, die an der Stirnfläche des Spannschaftes 16 mündet und im Bereich der Werkzeugschneiden aus dem Werkzeug austritt, so daß das in die Bohrung 27 einströ-mende Kühlmittel unmittelbar den Werkzeug-schneiden zuströmt. Das in eine axiale Aufnahmebohrung 28 des Grundkörpers 2 einragende Ende 29 des Mitnehmers 8 ist mit einer in einen axialen Aufnahmeraum 31 des Endes 29 eingesetzten Buchse 32 versehen, welche auf dem Führungsbolzen 33 axial beweglich gelagert ist. Eine zweite axial bewegliche Lagerung erfährt der Mitnehmer 8 an seinem ausragenden Ende 9, das in der Eintiefung 34 des aus der Werkzeugspindel 4 ausragenden Endes 35 des Grundkörpers 2 aufgenommen ist. Zur leichtgängigen axialen Beweglichkeit ist der Mitnehmer 8 an seinem Ende 9 mit einer axial beweglichen Kugellagerung 37 versehen, die gleichzeitig eine drehfeste Mitnahme des Mitnehmers 8 durch den rotierenden Grundkörper 2 bewirkt. Der Mitnehmer 8 ist gegen den Druck der Feder 38 in Pfeilrichtung X gegen die Werkzeugspindel 4 hin beweglich. Die Feder 38 stützt sich auf dem Ring 39 und der Schulter 40 im Grundkörper 2 ab und liegt mit ihrem entgegengesetzten Ende an der Scheibe 41 an, die an einer Schulter des Mitnehmers 8 anliegt. Die Axialbewegung der Scheibe 41 wird durch den Ring 48 begrenzt. Zur Bildung eines Strömungskanals für das von einem Übertragungsring 43 durch die Bohrungen 44 in den Innenraum 45 des Grundkörpers 2 einströmenden Kühlmittel, ist der Führungsbolzen 33 mit einer Axialbohrung 46 versehen, die in radiale Bohrungen 47 einmündet. Diese radialen Bohrungen 47 münden in einen Freiraum 51 am Führungsbolzen 33. Von hier führt der Kanal durch die Längsnuten 54 an der Buchse 32 zur Axialbohrung 26 des Zuführstößels 21 und weiter zur Bohrung 27 im Spannschaft 16 und zu den Schneiden des Werkzeugs.

Zum Schneiden von Gewinden wird der Vorschub der Werkzeugspindel 4 auf einen Wert eingestellt, der geringfügig kleiner ist als die Steigung des zu schneidenden Gewindes. Durch diese Differenz bewegt sich der Mitnehmer 8 mit Zange 13 weiter auf das Werkstück zu als der Grundkörper 2, so daß sich der Mitnehmer 8 gegen den Druck der Feder 38 in Pfeilrichtung X bewegt. Ist der Vorschub der Werkzeugspindel 4 z.B. auf einen Weg von 1 mm/Umdrehung der Werkzeugspindeleingestellt, bei einer Steigung des zu schneidenden Gewindes von 1,25 mm (M8), so ergibt sich eine Vorschub-Differenz von 0,25 mm/Umdrehung der Werkzeugspindel. Nach der Fertigstellung des Gewindes erfolgt der Rücklauf der Werkzeugspindel 4, womit der Vorschub-"Überschuß" wieder aufgehoben wird und der Mitnehmer 8 wieder in seine Ausgangsstellung zurückkehrt.

Das erfindungsgemäße Spannzangenfutter ist auch dann anwendbar, wenn der Vorschub dem Werkstück zugeordnet ist. Durch die erfindungsgemäße Ausbildung des axial beweglichen inneren Strömungskanals für die Kühlmittelzuleitung innerhalb des Spannzangenfutters ist eine leckagefreie, störungsunanfällige und sichere Versorgung der Werkzeugschneiden mit dem erforderlichen Kühlmittelstrom gewährleistet.

## Ansprüche

1. Spannzangenfutter mit im Innern verlaufenden Kühlmittelkanälen, die zu einem spanabhebenden Werkzeug führen, das in einer Spannzange eingespannt ist, die in einem Mitnehmer aufgenommen ist, der im Grundkörper des Spannzangenfutters axial beweglich gelagert ist, dadurch gekennzeichnet, daß der Mitnehmer (8) an seinem der Werkzeugspindel (4) zugewandten Ende (29) eine erste Lagerstelle im Grundkörper (2) aufweist, die vorzugsweise aus einer Buchse (32) besteht, die auf einem Führungsbolzen (33) axial beweglich gelagert ist und eine zweite Lagerstelle vorzugsweise als axiale Kugellagerung (37) vorgesehen ist, die in einer Eintiefung (34) des abragenden Endes (35) des Grundkörpers (2) angeordnet ist, und daß der Führungsbolzen (33) und die erste Lagerstelle (32) mit Strömungskanälen für einen Kühlmittelstrom versehen sind.

2. Spannzangenfutter nach Anspruch 1, dadurch gekennzeichnet, daß die Strömungskanäle im Führungsbolzen (33) durch mindestens eine axiale Bohrung (46) und durch mindestens eine radiale Bohrung (47) gebildet sind.

3. Spannzangenfutter nach Anspruch 1, dadurch gekennzeichnet, daß die Strömungskanäle der Buchse (32) durch mindestens eine radiale Bohrung (52) und mindestens eine Längsnut (54) gebildet sind.

4. Spannzangenfutter nach einem der Ansprüche 1 bis 3, dadurch gekennzeichnet, daß zwischen den Strömungskanälen des Führungsbolzens (33) und denen der Buchse (32) ein Freiraum (51) vorhanden ist.

5. Spannzangenfutter nach Anspruch 1, dadurch gekennzeichnet, daß der im Grundkörper (2) axial beweglich gelagerte Mitnehmer (8) unter der Wirkung der Feder (38) unter Zwischenlage der Scheibe (41) am Ring (48) anliegt.

6. Spannzangenfutter nach Anspruch 1, dadurch gekennzeichnet, daß das die Spannzange (13) aufnehmende Ende (35) des Mitnehmers (8) in einer Aufnahmebohrung (19) eine Führungsmutter (20) aufweist, in der ein Zuführstößel (21) beweglich gelagert ist.

7. Spannzangenfutter nach Anspruch 6, dadurch gekennzeichnet, daß der Zuführstößel (21) durch die Wirkung der Feder (22) gegen die Stirnfläche (25) des Spannschaftes (16) des Werkzeugs (15) anliegt.

8. Spannzangenfutter nach einem der Ansprüche 6 oder 7, dadurch gekennzeichnet, daß der Zuführstößel (21) mit mindestens einer, einen Strömungskanal bildenden Bohrung (26) versehen ist.

9. Spannzangenfutter nach Anspruch 8, dadurch gekennzeichnet, daß die als Strömungskanal eingebrachte Bohrung (26) unter Zwischenlage einer Dichtung strömungsmäßig zum Strömungskanal (27) im Werkzeug (15) verbunden ist.

10. Spannzangenfutter nach einem der Ansprüche 6 bis 9,
dadurch gekennzeichnet, daß die Axialbewegung des Zuführstößels (21) durch einen Anschlag begrenzt ist.

11. Spannzangenfutter nach einem der Ansprüche 1 bis 10,
dadurch gekennzeichnet, daß der Mitnehmer (8) mit dem Grundkörper (2) drehfest verbunden ist.

45  33  44  46 32      43 44 47 31 54 48  5  20  35 37      9   17   10 16 13 27  15

29                                          14

EP 0 434 023 A2

d2

6

3   4      7  2  28  40  39  51 38 52  41 55  53 19 21      22    23    25    8

34

26